Europäisches Patentamt

European Patent Office

Office européen des brevets

(11) Publication number: **0 430 206 B1**

## EUROPEAN PATENT SPECIFICATION

(45) Date of publication of patent specification: **14.06.95** (51) Int. Cl.6: **C03C 8/24**, C03C 3/14

(21) Application number: **90122745.4**

(22) Date of filing: **28.11.90**

(54) **Sealing glass.**

(30) Priority: **28.11.89 JP 308671/89**
**15.06.90 JP 157966/90**

(43) Date of publication of application:
**05.06.91 Bulletin 91/23**

(45) Publication of the grant of the patent:
**14.06.95 Bulletin 95/24**

(84) Designated Contracting States:
**DE FR GB**

(56) References cited:
**GB-A- 776 784**
**US-A- 3 420 683**

**CHEMICAL ABSTRACTS, vol. 102, no. 20, 20**
**May 1985, Columbus, Ohio, US, page 304;**
**ref.no. 171513Y; & SU-A-1 119 990**

**WORLD PATENTS INDEX, Accession No.**
**70-33909R, week 19, Derwent Publications**
**Ltd., London, GB; & JP-A-45 012 507**

**CHEMICAL ABSTRACTS, vol. 110, no. 10, 15**
**May 1989, Columbus, Ohio, US, page 322;**
**ref.no. 178286A; & JP-A-63 274 638**

(73) Proprietor: **MATSUSHITA ELECTRIC INDUSTRI-**
**AL CO., LTD.**
**1006, Oaza Kadoma**
**Kadoma-shi,**
**Osaka-fu, 571 (JP)**

(72) Inventor: **Mizuno, Yasuo**
**67-1-105, Ikaganishi-machi**
**Hirakata-shi,**
**Osaka-fu (JP)**
Inventor: **Ikeda, Masaki**
**37-15, Yamadaike Higashi-machi**
**Hirakata-si,**
**Osaka-fu (JP)**
Inventor: **Yoshida, Akihiko**
**19-13, Yamanote-cho,**
**Korien**
**Hirakata-shi,**
**Osaka-fu (JP)**

(74) Representative: **Eisenführ, Speiser & Partner**
**Martinistrasse 24**
**D-28195 Bremen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

CHEMICAL ABSTRACTS, vol. 109, no. 22, 28 November 1988, Columbus, Ohio, US, page 364, ref.no. 195921A; & JP-A-63 170 241

CHEMICAL ABSTRACTS, vol. 97, no. 4, 26 July 1982, Columbus, Ohio, US, page 246; ref.no. 27612R; & SU-A-910 514

## Description

The present invention relates to a sealing glass for a magnetic head.

With the progress of electronics, need for various kinds of glass has been increased.

Conventional sealing glasses will be explained by making reference to a sealing glass for magnetic heads.

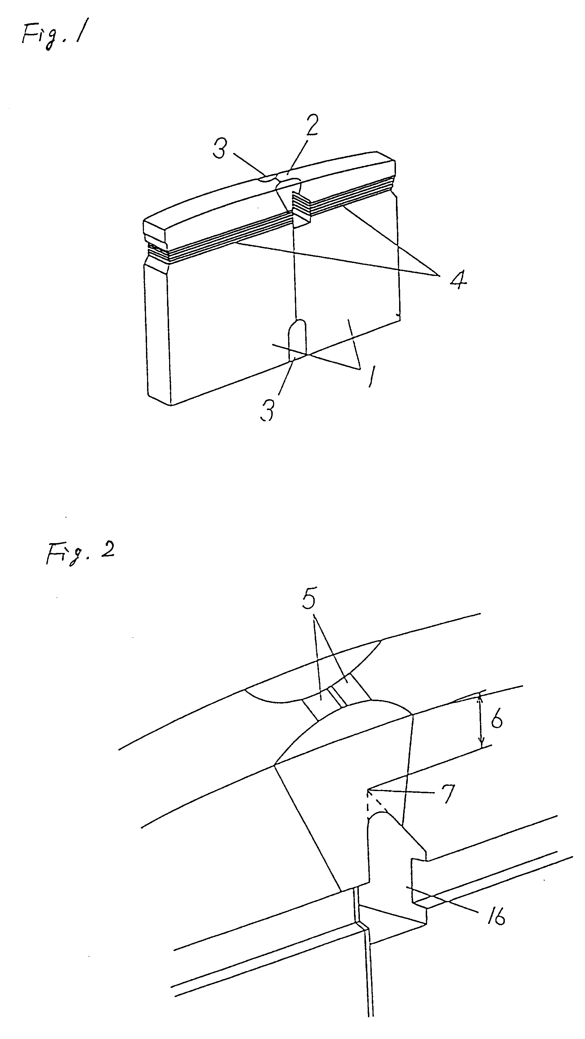

Fig. 1 shows a perspective view of a typical magnetic head for a VTR which comprises a core made of ferrite. Ferrite core parts 1 are faced to each other with a constant gap distance therebetween, and a formed gap is filled with a gap glass 2 and bonded with a sealing glass 3. Around the ferrite core parts, coil 4 is wound.

Although, the sealing glass should be sufficiently softened and flowed to bond the cores when heated, a softening or working point is preferably as low as possible to prevent interaction between the core material and the glass.

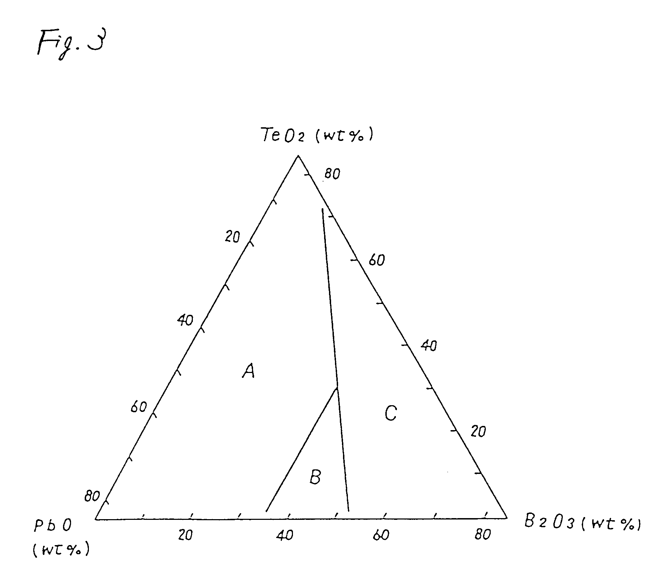

Further, the sealing glass has a coefficient of thermal expansion close to that of the ferrite. In general, the ferrite has a coefficient of thermal expansion of $80 \times 10^{-7}$ to $115 \times 10^{-7}/°C$. Recently, a ferrite having high saturation magnetic flux density has been developed to be used with a high resolution tape. Such new ferrite has a coefficient of thermal expansion of about $130 \times 10^{-7}/°C$ (see, for example, Horikawa et al, the Preprint for the Society of Applied Physics, 4a-ZE-8, October, 1985). As magnetic materials as substitutes for the ferrite in the same fields, amorphous alloys, superstructural nitride alloys (see, for example, the Technical Study Reports of the Electronics, Information and Communication Society, MR-86-4, 87-14) and Sendust have been used. Among them, Sendust has a coefficient of thermal expansion of about $140 \times 10^{-7}/°C$. Such new magnetic materials 5 are formed near the gap of the magnetic head by spattering as shown in Fig. 2, in which "6" represents a gap depth, and "16" represents an opening for winding. The sealing glass should have a coefficient of thermal expansion suitable for such structure of the magnetic head of Fig. 2.

The magnetic head is polished during processing. Since water is used in the polishing step, the sealing glass is required to have good water resistance. In addition, if the glass is darkly colored or devitrified (or crystallized) during processing, an apex 7 is not seen when the gap depth 6 is adjusted at a predetermined depth.

In view of the above facts, the sealing glass for the magnetic head should meet at least following requirements:

(a) Its working temperature is low.

(b) Its coefficient of thermal expansion is close to that of the magnetic material, for example, from $80 \times 10^{-7}$ to $140 \times 10^{-7}/°C$.

(c) It has good water resistance.

(d) It is not darkly colored and not devitrified (crystallized) during processing.

As a result of preliminary experiments on the water resistance of the glass, it was found that the glass preferably has water resistance of "First Class" when expressed according to the classes determined by the Japan Optical Glass Industries Association (Nippon Kogaku Garasu Kogyokai).

From the above view points, various sealing glasses have been proposed.

(1) Japanese Patent Kokai Publication Nos. 255643/1985, 36135/1986 and 111935/1986 disclose a glass having a coefficient of thermal expansion of $70 \times 10^{-7}$ to $130 \times 10^{-7}/°C$ and a working temperature of from 400 to 600°C.

(2) Japanese Patent Kokai Publication No. 36040/1987 discloses a glass having a coefficient of thermal expansion of $112 \times 10^{-7}$ to $155 \times 10^{-7}/°C$ and a working temperature of from 400 to 560°C.

(3) Japanese Patent Kokai Publication No. 170240/1988 discloses a glass having a coefficient of thermal expansion of $119 \times 10^{-7}$ to $126 \times 10^{-7}/°C$ and a working temperature of 550°C.

(4) Japanese Patent Kokai Publication No. 206330/1988 discloses a glass having a coefficient of thermal expansion of $85 \times 10^{-7}$ to $105 \times 10^{-7}/°C$ and a working temperature of from 500 to 550°C.

(5) One of commercially available glass, namely T 015 (manufactured by Iwaki Glass Co., Ltd.) has a coefficient of thermal expansion of $112 \times 10^{-7}$ and a working temperature of 450°C, and another, namely T 176 (manufactured by Iwaki Glass Co., Ltd.) has a coefficient of thermal expansion of $120 \times 10^{-7}/°C$ and a working temperature of 430°C.

However, each of the above conventional glasses has its own defects.

For example, since the glass (1) contains 30 to 70 % of $V_2O_5$, it is black. Therefore, this glass does not satisfy the above requirement (d).

Since the glass (2) contains a large amount of ZnO, a combination of $SiO_2 + SnO_2 + TiO_2 + ZrO_2$, and a combination of $WO_3 + MoO_3$ which crystallize the glass easily, raw materials are not vitrified during

3

EP 0 430 206 B1

melting, or the formed glass is easily devitrified during processing. Then, this glass does not satisfy the requirement (d).

Since the glass (3) contains a large amount, for example, 5 % or more of $Na_2O$, it has insufficient water resistance and does not satisfy the requirement (c).

Since the glass (4) contains a large amount of $SiO_2$ or $Al_2O_3$ which crystallizes the glass easily, it is easily devitrified during processing and does not satisfy the requirement (c).

Since the commercially availabel glasses (5) both contain a large amount of PbO and $B_2O_3$, they are easily devitrified during processin and do not satisfy the above requirement (c).

One object of the present invention is to provide a novel sealing glass which is suitable for sealing electronic parts, in particular magnetic heads. An aspect of this object is to provide a sealing glass which has a comparatively lower working temperature, a coefficient of thermal expansion close to that of a magnetic material and good water resistance and which is not darkly colored or devitrified during processing.

According to the present invention, there is provided a sealing glass which comprises:

1 to 75 % by weight of $TeO_2$,
1 to 30 % by weight of $B_2O_3$,
1 to 75 % by weight of PbO,
1 to 25 % by weight of CdO,
0 to 15 % by weight of ZnO,
0 to 25 % by weight of $Bi_2O_3$,
0 to 5 % by weight of $A_2O$ wherein A is an alkali metal,
0 to 35 % by weight of ARO wherein AR is an alkaline earth metal,
0 to 35 % by weight of $La_2O_3$,
0 to 5 % by weight of at least one oxide selected from the group consisting of $Al_2O_3$, $SiO_2$, $TiO_2$ and $ZrO_2$,
0 to 10 % by weight of at least one oxide selected from the group consisting of $Ta_2O_5$, $Nb_2O_5$, $WO_3$, and $MoO_3$,
0 to 30 % by weight of $PbF_2$, and
0 to 2 % by weight of CoO,
and which has a coefficient of thermal expansion from $80 \times 10^{-7}$ to $140 \times 10^{-7}/°C$ in the temperature range between 30 and 300 °C, a working temperature from 430 to 620 °C and a water resistance of "first class" and is not colored and not devitrified during processing.

Fig. 1 is a perspective view of a magnetic head,

Fig. 2 is an enlarged partial view of a magnetic head,

Fig. 3 is a ternary diagram of a sealing glass compositions comprising 10 % by weight of CdO, 5 % by weight of ZnO and varying amounts of $TeO_2$, $B_2O_3$ and PbO, and

Figs. 4A to 4E are photographs showing conditions of an interface between superstructural nitride alloy and the glass of Sample No. 13 containing CoO.

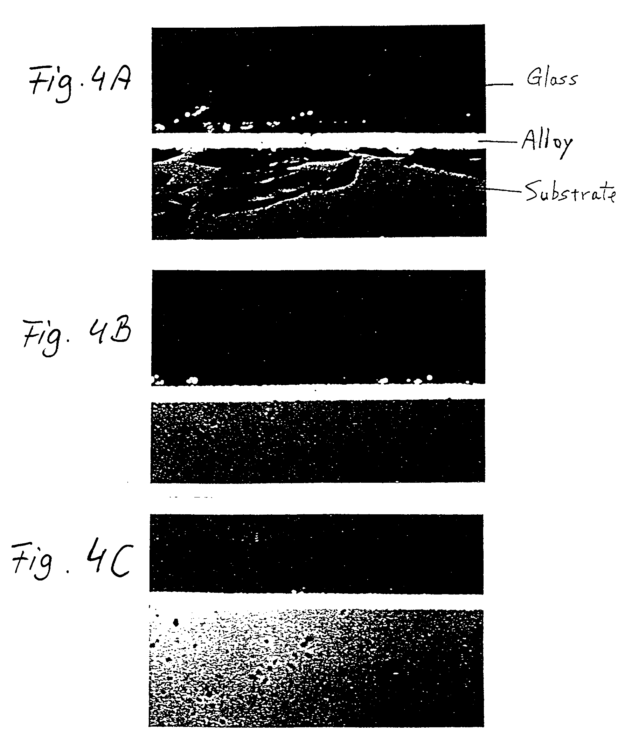

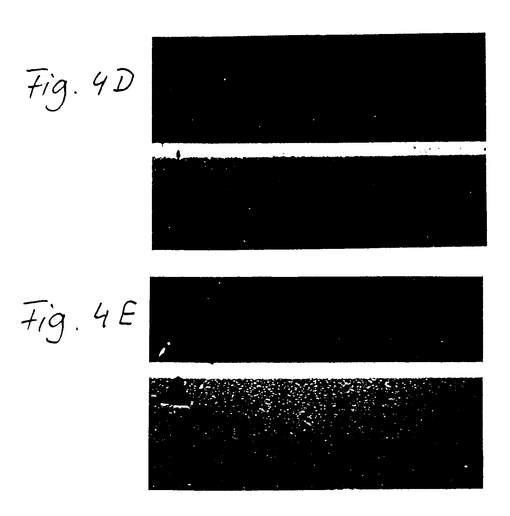

Fig. 1 is a ternary diagram of sealing glass compositions comprising 10 % by weight of CdO, 5 % by weight of ZnO and varying amounts of $TeO_2$, $B_2O_3$ and PbO which are major components. The sealing glass has a basic composition in the area A in Fig. 3 and optionally contains other components. The glass having a composition in the area B has a coefficient of thermal expansion of smaller than $80 \times 10^{-7}$ and does not satisfy the above requirement (b).

The sealing glass of the present invention will be explained in connection with compositions shown in Tables 1 and 2.

Table 1 shows the compositions of the glass and also vitrification states, coefficients ($\alpha$) of thermal expansion, yielding points, working temperatures, water resistance and total evaluation.

The vitrification states are evaluated according to the following criteria:

O:    Vitrified during melting.

X:    Vitrified during melting but devitrified during processing.

XX:    Not vitrified during melting.

The coefficient of thermal expansion is measured between 30 and 300°C. The yielding point is a temperature at which elongation stops in an alpha curve. The working temperature is a temperature at which the glass is fully expanded when the glass is drawn to a fiber having a diameter of 1 mm and a length of 25 mm and placed on a piece of ferrite having a width of 2.6 mm and a length of 25 mm. Water resistance is expressed in terms of "Class" determined by the Japan Optical Glass Industries Association.

4

Table 1   (*:comparative examples)

| Sample No. | 1* | 2 | 3 | 4 | 5 | 6 | 7 | 8 | 9* | 10* | 12 | 13 | 14* |
|---|---|---|---|---|---|---|---|---|---|---|---|---|---|
| Component (wt. %) | | | | | | | | | | | | | |
| $TeO_2$ | | 1 | 15 | 35 | 55 | 65 | 74 | 75 | 80 | 35 | 35 | 35 | 35 |
| $B_2O_3$ | 10 | 10 | 10 | 10 | 10 | 10 | 10 | 10 | 5 | | 15 | 30 | 35 |
| PbO | 75 | 74 | 60 | 40 | 20 | 10 | 1 | | | 50 | 35 | 20 | 15 |
| ZnO | 5 | 5 | 5 | 5 | 5 | 5 | 5 | 5 | 5 | 5 | 5 | 5 | 5 |
| CdO | 10 | 10 | 10 | 10 | 10 | 10 | 10 | 10 | 10 | 10 | 10 | 10 | 10 |
| $Bi_2O_3$ | | | | | | | | | | | | | |
| $Tl_2O$ | | | | | | | | | | | | | |
| $Li_2O$ | | | | | | | | | | | | | |
| BaO | | | | | | | | | | | | | |
| $Al_2O_3$ | | | | | | | | | | | | | |
| $La_2O_3$ | | | | | | | | | | | | | |
| Vitrification | X | O | O | O | O | O | O | X | XX | XX | O | O | XX |
| Coefficient of thermal expansion (x $10^{-7}$/°C) | | 121 | 124 | 129 | 135 | 136 | 137 | | | | 116 | 92 | |
| Yielding point (°C) | | 325 | 353 | 378 | 391 | 391 | 392 | | | | 413 | 469 | |
| Working temp.(°C) | | 430 | 460 | 490 | 510 | 510 | 510 | | | | 530 | 590 | |
| Water resistance (Class) | | 1 | 1 | 1 | 1 | 1 | 1 | | | | 1 | 1 | |
| Total evaluation | XX | O | O | O | O | O | O | XX | XX | XX | O | O | XX |

EP 0 430 206 B1

<u>Table 1</u> (continued)

| Sample No. | 15 | 16 | 17 | 18* | 19* | 20 | 21 | 22 | 23* | 24 | 25 | 26 | 27 | 28 |
|---|---|---|---|---|---|---|---|---|---|---|---|---|---|---|
| <u>Component</u> (wt. %) | | | | | | | | | | | | | | |
| $TeO_2$ | 35 | 35 | 35 | 35 | 35 | 35 | 35 | 35 | 35 | 35 | 35 | 35 | 35 | 35 |
| $B_2O_3$ | 10 | 10 | 10 | 10 | 10 | 10 | 10 | 10 | 10 | 10 | 10 | 10 | 10 | 10 |
| PbO | 45 | 35 | 30 | 25 | 10 | 49 | 30 | 25 | 20 | 35 | 35 | 35 | 30 | 20 |
| ZnO | | 10 | 15 | 20 | 5 | 5 | 5 | 5 | 5 | 5 | 5 | 5 | 5 | 5 |
| CdO | 10 | 10 | 10 | 10 | | 1 | 20 | 25 | 30 | 10 | 10 | 10 | 10 | 10 |
| $Bi_2O_3$ | | | | | | | | | | 5 | | | | |
| $Tl_2O$ | | | | | | | | | | | 5 | | | |
| $Li_2O$ | | | | | | | | | | | | 5 | | |
| BaO | | | | | | | | | | | | | 10 | 20 |
| $Al_2O_3$ | | | | | | | | | | | | | | |
| $La_2O_3$ | | | | | | | | | | | | | | |
| Vitrification | O | O | O | XX | O | O | O | O | XX | O | O | O | O | O |
| Coefficient of thermal expansion ($\times 10^{-7}$/°C) | 137 | 124 | 118 | | 131 | 130 | 117 | 110 | | 125 | 125 | 135 | 133 | 136 |
| Yielding point (°C) | 374 | 399 | 415 | | 377 | 378 | 422 | 450 | | 384 | 370 | 361 | 397 | 416 |
| Working temp.(°C) | 490 | 520 | 530 | | 490 | 490 | 540 | 570 | | 490 | 480 | 470 | 520 | 540 |
| Water resistance (Class) | 1 | 1 | 1 | | 2 | 1 | 1 | 1 | | 1 | 1 | 1 | 1 | 1 |
| Total evaluation | O | O | O | XX | X | O | O | O | XX | O | O | O | O | O |

6

Table 1 (continued)

| Sample No. | 29 | 30* | 31 | 32 | 33 | 34 | 35 | 36* |
|---|---|---|---|---|---|---|---|---|
| Component (wt. %) | | | | | | | | |
| $TeO_2$ | 35 | 35 | 35 | 35 | 35 | 35 | 35 | 35 |
| $B_2O_3$ | 10 | 10 | 10 | 10 | 10 | 10 | 10 | 10 |
| PbO | 10 | . | 35 | 35 | 30 | 20 | 10 | |
| ZnO | 5 | 5 | 5 | 5 | 5 | 5 | 5 | 5 |
| CdO | 10 | 10 | 10 | 10 | 10 | 10 | 10 | 10 |
| $Bi_2O_3$ | | | | | | | | |
| $Tl_2O$ | | | | | | | | |
| $Li_2O$ | | | | | | | | |
| BaO | 30 | 40 | | | | | | |
| $Al_2O_3$ | | | 5 | | | | | |
| $La_2O_3$ | | | | 5 | 10 | 20 | 30 | 40 |
| Vitrification    . | O | XX | O | O | O | O | O | XX |
| Coefficient of thermal expansion $(x\ 10^{-7}/°C)$ | 136 | | 121 | 124 | 118 | 110 | 97 | |
| Yielding point (°C) | 441 | | 415 | 410 | 419 | 421 | 460 | |
| Working temp.(°C) | 560 | | 540 | 530 | 540 | 540 | 580 | |
| Water resistance (Class) | 1 | | 1 | 1 | 1 | 1 | 1 | |
| Total evaluation | O | XX | O | O | O | O | O | XX |

EP 0 430 206 B1

Table 1 (continued)

| Sample No. | 37 | 38 | 39 | 40 | 41 | 42 | 43 | 44 | 45 | 46 | 47 | 49 | 50 |
|---|---|---|---|---|---|---|---|---|---|---|---|---|---|
| Component (wt. %) | | | | | | | | | | | | | |
| $TeO_2$ | 35 | 35 | 35 | 35 | 35 | 35 | 35 | 35 | 35 | 35 | 35 | 18 | 25 |
| $B_2O_3$ | 10 | 10 | 10 | 10 | 10 | 10 | 10 | 10 | 10 | 10 | 10 | 14 | 30 |
| PbO | 35 | 35 | 35 | 35 | 30 | 35 | 30 | 35 | 30 | 35 | 30 | 45 | 30 |
| ZnO | 5 | 5 | 5 | 5 | 5 | 5 | 5 | 5 | 5 | 5 | 5 | 13 | 5 |
| CdO | 10 | 10 | 10 | 10 | 10 | 10 | 10 | 10 | 10 | 10 | 10 | 10 | 10 |
| $SiO_2$ | 5 | | | | | | | | | | | | |
| $TiO_2$ | | 5 | | | | | | | | | | | |
| $Zr_2O$ | | | 5 | | | | | | | | | | |
| $Nb_2O_5$ | | | | 5 | 10 | | | | | | | | |
| $Ta_2O_5$ | | | | | | | 5 | 10 | | | | | |
| $WO_3$ | | | | | | | | | 5 | 10 | | | |
| $MoO_3$ | | | | | | | | | | | 5 | 10 | |
| Vitrification | O | O | O | O | O | O | O | O | O | O | O | O | O |
| Coefficient of thermal expansion ($\times 10^{-7}$/°C) | 114 | 115 | 113 | 121 | 109 | 125 | 105 | 128 | 122 | 130 | 124 | 102 | 86 |
| Yielding point (°C) | 425 | 422 | 426 | 412 | 439 | 409 | 448 | 402 | 418 | 391 | 409 | 408 | 482 |
| Working temp. (°C) | 550 | 540 | 550 | 530 | 560 | 530 | 570 | 510 | 540 | 510 | 530 | 530 | 600 |
| Water resistance (Class) | 1 | 1 | 1 | 1 | 1 | 1 | 1 | 1 | 1 | 1 | 1 | 1 | 1 |
| Total evaluation | O | O | O | O | O | O | O | O | O | O | O | O | O |

Note: *) $Bi_2O_3$.

EP 0 430 206 B1

Table 1 (continued)

| Sample No. | 51 | 52 | 53 | 54 |
|---|---|---|---|---|
| Component (wt. %) | | | | |
| $TeO_2$ | 15 | 7.5 | 22.5 | 65 |
| $B_2O_3$ | 30 | 9.2 | 9.2 | 10 |
| PbO | 40 | 66.6 | 56.6 | 10 |
| ZnO | 5 | 3.8 | 3.8 | 5 |
| CdO | 10 | 9.4 | 4.4 | 10 |
| $SiO_2$ | | 2.7 | 2.7 | |
| $Al_2O_3$ | | 1 | 1 | |
| $Zr_2O$ | | | | |
| $Nb_2O_5$ | | | | |
| $Ta_2O_5$ | | | | |
| $WO_3$ | | | | |
| $MoO_3$ | | | | |
| Vitrification | O | O | O | O |
| Coefficient of thermal expansion $(x\ 10^{-7}/°C)$ | 82 | 113 | 118 | 136 |
| Yielding point (°C) | 500 | 363 | 378 | 391 |
| Working temp.(°C) | 620 | 470 | 490 | 510 |
| Water resistance (Class) | 1 | 1 | 1 | 1 |
| Total evaluation | O | O | O | O |

9

Table 2

| Sample No. | 1 | 2 | 3 | 4 | 5 | 6 |
|---|---|---|---|---|---|---|
| Component (wt. %) | | | | | | |
| TeO$_2$ | 18 | 18 | 18 | 18 | 18 | 18 |
| B$_2$O$_3$ | 14 | 14 | 14 | 14 | 14 | 14 |
| PbO | 45 | 40 | 35 | 25 | 10 | |
| ZnO | 13 | 13 | 13 | 13 | 13 | 13 |
| CdO | 10 | 10 | 10 | 10 | 10 | 10 |
| PbF | | 5 | 10 | 20 | 35 | 45 |
| Vitrification | O | O | O | O | X | X |
| Coefficient of thermal expansion (x $10^{-7}$/$^\circ$C) | 102 | 103 | 105 | 108 | 114 | 118 |
| Yielding point ($^\circ$C) | 408 | 401 | 388 | 381 | 357 | 353 |
| Working temp.($^\circ$C) | 530 | 520 | 510 | 500 | 470 | 460 |
| Water resistance (Class) | 1 | 1 | 1 | 1 | 1 | 1 |
| Total evaluation | O | O | O | O | XX | XX |

In the Sample Nos. 1 to 9, contents of TeO$_2$ and PbO were changed. When the content of TeO$_2$ is zero or exceeded 75 % by weight, it was difficult to vitrify the material. This means that the content of PbO is restricted to a range between 1 and 75 % by weight.

In the Sample Nos. 10 to 14, a content of B$_2$O$_3$ was changed. When it was zero or exceeded 30 % by weight, it was difficult to vitrify the material.

In the Sample Nos. 15 to 18, a content of ZnO was changed. ZnO can decrease the coefficient of thermal expansion while it does not change the working temperature of the glass materially. When the content of ZnO exceeds 15 % by weight, vitrification becomes difficult.

In the Sample Nos. 19 to 23, a content of CdO, which is one of the essential components, was changed. CdO improves the water resistance of the glass. When no CdO is present, the water resistance is deteriorated, while when the content of CdO exceeds 25 % by weight, vitrification becomes difficult.

In the Sample Nos. 24 and 25, Bi$_2$O$_3$ or Tl$_2$O was added to the glass composition. They can decrease the coefficient of thermal expansion while it does not change the working temperature of the glass materially. They may be contained in an amount of up to 25 % by weight. When their content exceeds 25 % by weight, the water resistance may tend to decrease.

In the Sample No. 26, Li$_2$O which a typical example of the alkali metal oxide (A$_2$O) was added to the glass composition. The alkali metal oxide increases the coefficient of thermal expansion. When the content of the alkali metal oxide exceeds 5 % by weight, the vitrification becomes difficult.

In the Sample Nos. 27 to 30, BaO which is a typical example of the alkaline earth metal oxide (ARO) was added to the glass composition. BaO can increase the coefficient of thermal expansion, while it does not change the water resistance substantially. When the content of BaO exceeds 35 % by weight, the vitrification becomes difficult.

In the Sample No. 31, Al$_2$O$_3$ was added to the glass composition. Al$_2$O$_3$ decreases the coefficient of thermal expansion. When its content exceeds 5 % by weight, the vitrification becomes difficult.

In the Sample Nos. 32 to 36, La$_2$O$_3$ was added to the glass composition. La$_2$O$_3$ increases the water resistance. When its content exceeds 35 % by weight, the vitrification becomes difficult.

In the Sample Nos. 37 to 39, SiO$_2$, TiO$_2$ or ZrO$_2$ was added to the glass composition. They decrease the coefficient of thermal expansion. When their content exceeds 5 % by weight, the vitrification becomes difficult.

In the Sample Nos. 40 to 47, Nb$_2$O$_5$, Ta$_2$O$_5$, WO$_3$ or MoO$_3$ was added to the glass composition. They decrease the coefficient of thermal expansion. When its content exceeds 10 % by weight, the vitrification becomes difficult.

The Sample Nos. 48 to 54 were other various examples of the glass compositions.

All the glasses were not devitrified and had the thermal coefficient of from 82 x $10^{-7}$ to 137 to $10^{-7}$/$^\circ$C, the working temperature of from 430 to 620$^\circ$C and water resistance of "First" or "Second" Class. Therefore, they satisfy the requirements for the sealing glass for the magnetic head.

Table 2 shows the change of the properties when PbO in the glass composition of the Sample No. 49 was replaced with $PbF_2$. When the content of $PbF_2$ exceeded 35 % by weight, the glass devitrified during processing. Therefore, the content of $PbF_2$ should be limited in the range between 0 and 30 % by weight.

Figs. 4A to 4E show conditions of an interface between superstructural nitride alloy and the glass of Sample No. 13 to which CoO was added in varying amounts.

Figs. 4A to 4E correspond to the glass of the Sample No. 13 to which 0, 0.2, 0.5, 1.0 and 2.0 % by weight of CoO was added, respectively.

As understood from Figs. 4A to 4E, the addition of CoO suppressed the interaction at the interface between the superstructural nitride and the glass. However, when 2.0 % by weight of CoO was added, the glass was partly cracked. Then, the content of CoO should not exceed 2.0 % by weight.

Comparative Example

Table 3 shows the properties of the conventional glass (2) (Sample Nos. C1 and C2), the conventional glass (3) (Sample Nos. C3 and C4) and the conventional glass (4) (Sample No. C5 and C6).

Each of them was difficult to vitrify, had poor water resistance or was devitrified during processing. Therefore, they are not practically usable. Since the conventional glasses (1) and (5) have the drawbacks as discussed in the above, they are not tested here.

Table 3

| Sample No. | C1 | C2 | C3 | C4 | C5 | C6 |
|---|---|---|---|---|---|---|
| Component (wt. %) | | | | | | |
| $TeO_2$ | 21.1 | 31.2 | | | 19 | 15 |
| $B_2O_3$ | 9.2 | 11.1 | 16 | 14 | 19 | 15 |
| PbO | 36.9 | 40.4 | 48 | 50 | 53 | 60 |
| ZnO | 8.1 | 10.6 | 9 | 7 | | |
| $SiO_2$ | | | 12 | 15 | 5 | 2 |
| $TiO_2$ | | 2.3 | | | | |
| $Al_2O_3$ | | | 3 | 4 | 1.5 | 6 |
| $WO_3$ | 15.3 | | | | *)1 | *)2 |
| $MoO_3$ | 9.5 | | | | | |
| $SnO_2$ | | 4.4 | | | | |
| $Na_2O$ | | | 12 | 10 | | |
| MgO | | | | | 1.5 | |
| Vitrification | XX | XX | O | O | X | X |
| Coefficient of thermal expansion (x $10^{-7}/°C$) | | | 119 | 121 | 96 | 102 |
| Yielding point (°C) | | | 385 | 390 | 380 | 360 |
| Working temp.(°C) | | | 550 | 550 | 540 | 510 |
| Water resistance (Class) | | | 3 | 3 | 1 | 1 |
| Total evaluation | XX | XX | XX | XX | XX | XX |

Note: *) CuO.

The glass of the present invention is used to seal the magnetic head. Also the glass of the present invention can be used to seal metals having the close coefficient of thermal expansion (e.g. platinum, titanium, chromium-iron alloys, 426 alloy, etc.) or other glasses (soda ash glass, lead-potassium glass, borosilicate glass, etc.) and can be used to adhere a CRT tube or as an IC package, a hermetic seal or a sheathed heater.

**Claims**

1. A sealing glass for a magnetic head which comprises:
   1 to 75 % by weight of $TeO_2$,

1 to 30 % by weight of $B_2O_3$,

1 to 75 % by weight of PbO,

1 to 25 % by weight of CdO,

0 to 15 % by weight of ZnO

0 to 25 % by weight of $Bi_2O_3$,

0 to 5 % by weight of $A_2O$ wherein A is an alkali metal,

0 to 35 % by weight of ARO wherein AR is an alkaline earth metal,

0 to 35 % by weight of $La_2O_3$,

0 to 5 % by weight of at least one oxide selected from the group consisting of $Al_2O_3$, $SiO_2$, $TiO_2$ and $ZrO_2$,

0 to 10 % by weight of at least one oxide selected from the group consisting of $Ta_2O_5$, $Nb_2O_5$, $WO_3$, and $MoO_3$,

0 to 30 % by weight of $PbF_2$, and

0 to 2 % by weight of CoO,

and which has a coefficient of thermal expansion from $80 \times 10^{-7}$ to $140 \times 10^{-7}/°C$ in the temperature range between 30 and 300 °C, a working temperature from 430 to 620 °C and a water resistance of "first class" and is not colored and not devitrified during processing.

**2.** The sealing glass according to claim 1, which further comprises a ceramic having small thermal expansion.

**Patentansprüche**

**1.** Abdichtungsglas für einen Magnetkopf, enthaltend

1 bis 75 Gew.-% $TeO_2$,

1 bis 30 Gew.-% $B_2O_3$,

1 bis 75 Gew.-% PbO,

1 bis 25 Gew.-% CdO,

0 bis 15 Gew.-% ZnO,

0 bis 25 Gew.-% $Bi_2O_3$,

0 bis 5 Gew.-% $A_2O$, wobei A ein Alkalimetall bedeutet,

0 bis 35 Gew.-% ARO, wobei AR ein Erdalkalimetall bedeutet,

0 bis 35 Gew.-% $La_2O_3$,

0 bis 5 Gew.-% mindestens eines Oxids, ausgewählt aus der Gruppe $Al_2O_3$, $SiO_2$, $TiO_2$ und $ZrO_2$,

0 bis 10 Gew.-% mindestens eines Oxids, ausgewählt aus der Gruppe $Ta_2O_5$, $Nb_2O_5$, $WO_3$ und $MoO_3$,

0 bis 30 Gew.-% $PbF_2$, und

0 bis 2 Gew.-% CoO,

wobei das Abdichtungsglas einen Koeffizienten der thermischen Ausdehnung von $80 \times 10^{-7}$ bis $140 \times 10^{-7}/°C$ im Temperaturbereich von 30 bis 300 °C, eine Arbeitstemperatur von 430 bis 620 °C und eine Wasserbeständigkeit der "ersten Klasse" aufweist und nicht gefärbt ist und während der Verarbeitung nicht entglast.

**2.** Abdichtungsglas nach Anspruch 1, weiter umfassend eine Keramik mit geringer thermischer Ausdehnung.

**Revendications**

**1.** Verre d'isolation étanche pour une tête magnétique, qui comprend :

1 à 75 % en poids de $TeO_2$,

1 à 30 % en poids de $B_2O_3$,

1 à 75 % en poids de PbO,

1 à 25 % en poids de CdO,

0 à 15 % en poids de ZnO,

0 à 25 % en poids de $Bi_2O_3$,

0 à 5 % en poids de $A_2O$, formule dans laquelle A représente un métal alcalin,

0 à 35 % en poids de ARO, formule dans laquelle AR représente un métal alcalino-terreux,

0 à 35 % en poids de $La_2O_3$,

0 à 5 % en poids d'au moins un oxyde choisi dans l'ensemble consistant en $Al_2O_3$, $SiO_2$, $TiO_2$ et

$ZrO_2$,

0 à 10 % en poids d'au moins un oxyde choisi dans l'ensemble consistant en $Ta_2O_5$, $Nb_2O_5$, $WO_3$ et $MoO_3$,

0 à 30 % en poids de $PbF_2$, et

0 à 2 % en poids de CoO,

et qui a un coefficient de dilatation thermique compris entre $80 \times 10^{-7}$ et $140 \times 10^{-7}/°C$, dans l'intervalle de la température compris entre 30 et 300°C, une température de travail de 430 à 620°C et une résistance à l'eau de "première classe" et qui n'est pas coloré et n'est pas dévitrifié pendant son traitement.

2. Verte de scellement selon la revendication 1, qui comprend en outre une céramique ayant une faible dilatation thermique.

Fig. 1

Fig. 2

Fig. 3

Fig. 4A

Glass

Alloy

Substrate

Fig. 4B

Fig. 4C

Fig. 4 D

Fig. 4 E